# EUROPÄISCHE PATENTSCHRIFT

(11) **EP 3 692 211 B1**
(45) Veröffentlichungstag und Bekanntmachung des Hinweises auf die Patenterteilung: **09.11.2022**
(21) Anmeldenummer: 18765835.6
(22) Anmeldetag: 03.09.2018
(51) Int. Cl.: E01B 27/16, B61C 3/02, B61D 43/00

(54) **GLEISBAUMASCHINE ZUM VERDICHTEN VON SCHOTTER**
TRACK-BUILDING MACHINE FOR COMPACTING BALLAST
ENGIN DE POSE DE VOIE SERVANT AU COMPACTAGE DE BALLAST

(30) Priorität: 03.10.2017 AT 3942017
(43) Veröffentlichungstag der Anmeldung: 12.08.2020
(73) Patentinhaber: Plasser & Theurer Export von Bahnbaumaschinen GmbH, 1010 Wien (AT)
(72) Erfinder: STADLER, Lothar, 1190 Wien (AT)
(86) Internationale Anmeldenummer: PCT/EP2018/073558
(87) Internationale Veröffentlichungsnummer: WO 2019/068400

(56) Entgegenhaltungen:
- WO-A1-2017/050414
- US-A1- 2006 005 738
- US-A1- 2011 083 578

## Beschreibung

### Gebiet der Technik

Die Erfindung betrifft eine Gleisbaumaschine zum Verdichten von Schotter unter Schwellen eines Gleises, mit einem mittels Fahrwerken auf dem Gleis verfahrbaren Maschinenrahmen und mit einem Stopfaggregat, das einen elektrischen Vibrationsantrieb zur Vibrationsbeaufschlagung von Stopfwerkzeugen umfasst. Zudem betrifft die Erfindung ein Verfahren zum Betreiben der Gleisbaumaschine.

### Stand der Technik

Eine Gleisbaumaschine mit einem Stopfaggregat, das einen elektrischen Vibrationsantrieb zur Vibrationsbeaufschlagung von Stopfwerkzeugen umfasst, ist beispielsweise aus der DE 24 17 062 A1 bekannt. Dabei sind zur Vibrationserzeugung in Schwenkarmen exzentrische Lagerbüchsen angeordnet. Über einen Kettentrieb wird von einer durch einen elektrischen Motor angetriebene Antriebswelle eine Drehbewegung auf die exzentrischen Lagerbüchsen übertragen.

Aus der österreichischen Patentanmeldung A 179/2017 ist ein Stopfaggregat mit einem zentralen Vibrationsantrieb bekannt, wobei die Vibration über Beistellzylinder auf die Stopfwerkzeuge übertragen wird. Der elektrische Vibrationsantrieb umfasst eine Exzenterwelle, die gemeinsam mit einem Rotor eines Elektromotors lediglich im Exzentergehäuse gelagert ist. Ein Stator des Elektromotors ist mit einem Motorgehäuse an dem Exzentergehäuse angeflanscht.
Die WO 2017/050414 A1 offenbart eine Gleisbaumaschine mit autonomer und redundanter Energieversorgung. Dabei werden Arbeitsaggregate über ein Verteilgetriebe entweder mittels eines Verbrennungsmotors oder mittels eines aus einer Oberleitung gespeisten Elektromotors mit Energie versorgt. Aus der US 2011/0083578 A1 ist ebenfalls eine Gleisbaumaschine mit einer elektrischen Energieversorgung bekannt, wobei während eines Bremsvorgangs Energie in einen Gleichstromkreis zurückgespeist wird.

### Zusammenfassung der Erfindung

Der Erfindung liegt die Aufgabe zugrunde, für eine Gleisbaumaschine und ein Verfahren der eingangs genannten Art eine Verbesserung gegenüber dem Stand der Technik anzugeben.

Erfindungsgemäß wird diese Aufgabe gelöst durch die unabhängigen Ansprüche 1 und 10. Vorteilhafte Weiterbildungen der Erfindung ergeben sich aus den abhängigen Ansprüchen.

Dabei ist ein elektrischer Zwischenkreis mit einem elektrischen Energiespeicher angeordnet, wobei zumindest einem Fahrwerk eine elektrische Maschine zugeordnet ist, die für einen generatorischen Betrieb mit dem Zwischenkreis gekoppelt ist, wobei der elektrische Vibrationsantrieb zur Versorgung an den Zwischenkreis gekoppelt ist und wobei eine Steuerungseinheit in der Weise zur koordinierten Ansteuerung der mit dem Zwischenkreis gekoppelten Komponenten eingerichtet ist, dass die Vibrationsbeaufschlagung der Stopfwerkzeuge zur unmittelbaren Energienutzung bereits während eines Bremsvorgangs beginnt. Auf diese Weise wird Bremsenergie in optimaler Weise zur Versorgung des Vibrationsantriebs genutzt. Dabei muss nur ein Teil der elektrischen Energie zwischengespeichert werden, weil der Energieverbrauch des Vibrationsantriebs bereits während eines Abbremsvorgangs der Gleisbaumaschine einsetzt.

In einer vorteilhaften Ausbildung der Erfindung umfasst der elektrische Energiespeicher einen Superkondensator. Damit ist eine hohe Leistungsdichte auf geringem Raum und bei geringem Gewicht erzielbar. Zudem erlaubt ein Superkondensator eine schnelle Entladung und ausreichend viele Lade- und Entladezyklen, wodurch der Vibrationsantrieb mit wiederkehrenden sprunghaft ansteigenden Leistungsspitzen optimal unterstützt wird.

Des Weiteren ist es sinnvoll, wenn der elektrische Energiespeicher einen Akkumulator umfasst. Auf diese Weise wird elektrische Energie für eine längere Zeitspanne zwischengespeichert. Bei geeigneter Dimensionierung des Akkumulators kann eine zusätzliche Versorgungseinrichtung (z.B. eine Verbrennungsmotor-Generator-Einheit) zwischenzeitliche abgeschaltet werden (z.B. in Tunnel).

Eine vorteilhafte Weiterbildung sieht vor, dass die elektrische Maschine als Fahrantrieb ausgebildet und mittels eines bidirektionalen Umrichters an den Zwischenkreis angeschlossen ist. Auf diese Weise wird die Gleisbaumaschine während einer Arbeitsfahrt mittels der elektrischen Maschine von Schwelle zu Schwelle bewegt, um eine zyklische Unterstopfung der Schwellen durchzuführen.

Zudem ist es günstige, wenn der Vibrationsantrieb mittels eines gesteuerten Wechselrichters an den Zwischenkreis angeschlossen ist. Damit ist ein einfacher und robuster Schaltungsaufbau sichergestellt.

Eine weitere Verbesserung zur Steigerung der Standfestigkeit und der Energieeffizienz sieht vor, dass der Vibrationsantrieb als bürstenloser Elektromotor ausgebildet ist. Eine Ausführung als Torquemotor mit Innenläufer liefert sehr hohe Drehmomente bei relativ kleinen Drehzahlen, wodurch ein Übersetzungsgetriebe entfällt. Das große Antriebsmoment eines Torquemotors ermöglicht große Beschleunigungen, wobei sich die resultierende Dynamik des Systems positiv auf einen Eintauchvorgang des Stopfaggregats auswirkt.

Erfindungsgemäß ist es für einen effizienten Betrieb der Gleisbaumaschine vorteilhaft, wenn die Steuerungseinheit zur koordinierten Ansteuerung der mit dem Zwischenkreis gekoppelten Komponenten eingerichtet ist. Die Steuerungseinheit kann dabei auch für andere Steuerungsaufgaben genutzt werden, beispielsweise für die Ansteuerung von Beistellantrieben. Günstigerweise sind die anzusteuernden Komponenten über ein Bus-System mit der Steuerungseinheit verbunden.

Eine vorteilhafte Ausprägung der Erfindung sieht vor, dass das Stopfaggregat an dem Maschinenrahmen angeordnet und somit eine zyklische Arbeitsweise der Gleisbaumaschine gegeben ist. Dabei wird die gesamte Maschine bei jeder Schwelle für einen Stopfvorgang abgebremst, wobei die Bremsenergie für die Vibrationserzeugung zur Verfügung steht. Bei einem kontinuierlichen Betrieb, wo nur ein Stopfsatellit mit dem Stopfaggregat zyklisch beschleunigt und abgebremst wird, reduziert sich diese nutzbare Energie entsprechend.

Um eine hohe Verfügbarkeit der Gleisbaumaschine sicherzustellen, ist es sinnvoll, wenn der Zwischenkreis zur zusätzlichen Energieversorgung mit einer Verbrennungsmotor-Generator-Einheit gekoppelt ist. Dann steht im Zwischenkreis jederzeit genügend Energie für den Vibrationsantrieb und den Fahrantrieb zur Verfügung.

Alternativ dazu oder ergänzend kann es auch von Vorteil sein, wenn der Zwischenkreis mit einer Umrichterschaltung zur Energieversorgung aus einer Oberleitung des Gleises gekoppelt ist. Das ermöglicht einen schadstofffreien und lärmreduzierten Betrieb der Gleisbaumaschine.

Das erfindungsgemäße Verfahren sieht vor, dass die Gleisbaumaschine beim Anfahren einer zu stopfenden Stelle des Gleises mittels der elektrischen Maschine unter Abgabe elektrischer Energie an den Zwischenkreis abgebremst wird und dass der Vibrationsantrieb während eines Stopfvorgangs in der Weise aus dem Zwischenkreis mit elektrischer Energie versorgt wird, dass die Vibrationsbeaufschlagung der Stopfwerkzeuge zur unmittelbaren Energienutzung bereits während des Bremsvorgangs beginnt. Damit ist ein effizienter Betrieb sichergestellt.

Bei einem verbesserten Verfahren werden die Stopfwerkzeuge während eines Eintauchens in den Schotter mit einer höheren Vibrationsfrequenz beaufschlagt als während eines Beistellvorgangs. Das ermöglicht ein leichteres Eindringen ins Schotterbett und somit kürzere Stopfzyklen. Zudem wirken sich die erhöhte Vibrationsfrequenz und der damit erreichte reduzierte Schotterwiderstand günstig auf den Verschleiß der Stopfwerkzeuge aus.

### Kurze Beschreibung der Zeichnungen

Die Erfindung wird nachfolgend in beispielhafter Weise unter Bezugnahme auf die beigefügten Figuren erläutert. Es zeigen in schematischer Darstellung:
- Fig. 1: Gleisbaumaschine
- Fig. 2: Schaltungsaufbau
- Fig. 3: Verlaufsdiagramme

### Beschreibung der Ausführungsformen

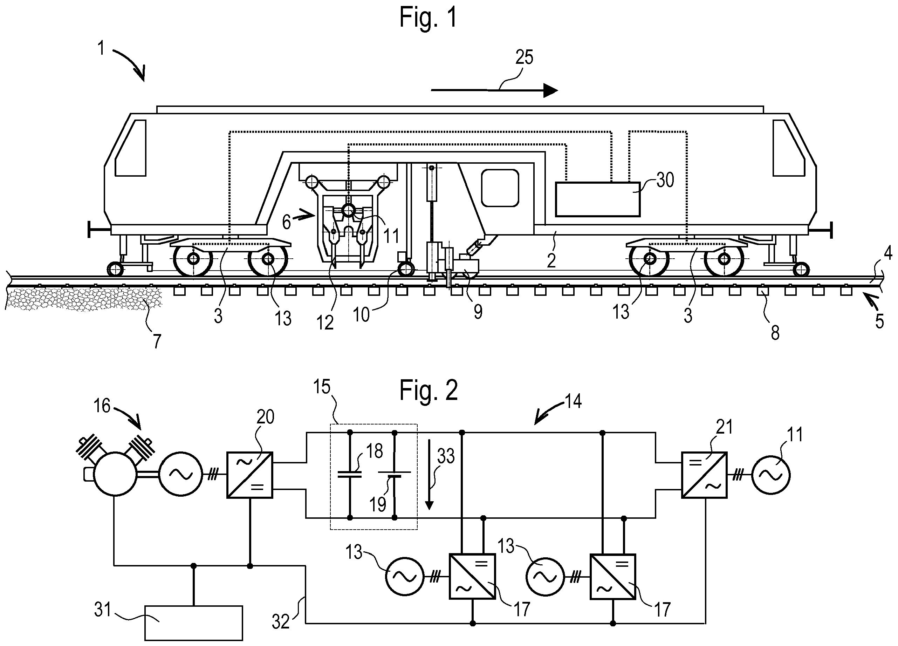

Die in Fig. 1 dargestellte Gleisbaumaschine 1 umfasst einen Maschinenrahmen 2, der mittels Fahrwerke 3 auf Schienen 4 eines Gleises 5 verfahrbar ist. Am Maschinenrahmen 2 ist ein Stopfaggregat 6 zum Verdichten von Schotter 7 unter Schwellen 8 des Gleises 5 angeordnet. Vor einem Verdichtungsvorgang wird das Gleis 5 mittels eines Hebe-Richt-Aggregats 9 in eine mittels eines Messsystems 10 vorgegebene Solllage gebracht.

Das Stopfaggregat 6 umfasst einen elektrischen Vibrationsantrieb 11 zur Vibrationsbeaufschlagung von Stopfwerkzeugen 12. Zudem sind hydraulische Antriebe zum Absenken bzw. Heben sowie zum Beistellen der Stopfwerkzeuge 12 vorgesehen. Der Vibrationsantrieb 11 ist vorteilhafterweise als bürstenloser Elektromotor ausgebildet.

Im dargestellten Beispiel handelt es sich um eine Gleisbaumaschine 1 mit zyklischer Arbeitsweise, weil während einer Arbeitsfahrt die gesamte Gleisbaumaschine 1 von Schwelle 8 zu Schwelle 8 bewegt wird. Dabei tauchen die Stopfwerkzeuge 12 während einer Haltephase in zwischen den Schwellen 8 befindliche Schwellenfächer ein. Alternativ dazu sind Gleisbaumaschinen 1 mit kontinuierlicher Arbeitsweise bekannt, wo lediglich ein sogenannter Stopfsatellit zyklisch bewegt wird. Die überwiegende Masse der Gleisbaumaschine 1 kann hingegen kontinuierlich am Gleis 5 entlang fahren.

Jedenfalls wird jeder Stopfzyklus mit einem Bremsvorgang eingeleitet, um das Stopfaggregat 12 über der zu unterstopfenden Schwelle 8 zu platzieren. Zu diesem Zweck ist zumindest ein Fahrwerk 3 mit einer elektrischen Maschine 13 ausgestattet, die für einen generatorischen Betrieb mit einem elektrischen Zwischenkreis 14 gekoppelt ist. Beim Anfahren einer Stopfstelle erzeugt die elektrische Maschine 13 ein Bremsmoment. Damit wird ein Großteil der kinetischen Energie der Gleisstopfmaschine 1 bzw. eines Stopfsatelliten während eines Bremsvorgangs in elektrische Energie umgewandelt und dem Zwischenkreis 14 zugeführt.

Erfindungsgemäß wird diese elektrische Energie zur Versorgung des elektrischen Vibrationsantriebs 11 genutzt. Das ist insofern vorteilhaft, weil die Vibrationsbeaufschlagung der Stopfwerkzeuge 12 bereits während des Bremsvorgangs beginnt und somit eine unmittelbare Energienutzung gegeben ist. Ein im Zwischenkreis 14 angeordneter Energiespeicher 15 muss demnach nicht die gesamte Bremsenergie Zwischenspeichern, wodurch ein geringerer Kapazitätsbedarf vorliegt.

Ein vorteilhafter Schaltungsaufbau ist in Fig. 2 dargestellt. Dabei sind zwei elektrische Maschinen 13 angeordnet, die sowohl generatorisch als auch motorisch betreibbar sind. Die jeweilige elektrische Maschine 13 dient dann auch als Fahrantrieb für die Beschleunigung der Gleisbaumaschine 1 nach einem Stopfvorgang. In diesem Fall wird dem Zwischenkreis 14 zusätzliche elektrische Energie zugeführt, beispielsweise mittels einer Verbrennungsmotor-Generator-Einheit 16 oder über eine Umrichterschaltung aus einer Oberleitung. Alternativ dazu kann die Vorwärtsbeschleunigung durch einen separaten Antrieb erfolgen.

Die jeweilige elektrische Maschine 13 ist vorteilhafterweise als Drehstrommotor ausgebildet und über einen bidirektionalen Umrichter 17 an den Gleichstrom-Zwischenkreis 14 angeschlossen. Der Energiespeicher 15 umfasst günstigerweise einen Superkondensator 18 und einen Akkumulator 19. Zusätzlich kann ein Ladegerät vorgesehen sein, um den Akkumulator 19 mit einer optimalen Ladespannung zu versorgen.

Die optionale Verbrennungsmotor-Generator-Einheit 16 ist über einen Gleichrichter 20 mit dem Zwischenkreise 14 gekoppelt. Dabei ist es günstig, wenn mittels des Akkumulators 19 Energie für mehrere Stopfzyklen gepuffert wird. Dann steht beispielsweise in Tunnel auch bei abgeschalteter Verbrennungsmotor-Generator-Einheit 16 eine Energieversorgung für den Vibrationsantriebs 11 und gegebenenfalls für den Fahrantrieb zur Verfügung.

Die Kopplung des Vibrationsantriebs 11 mit dem Zwischenkreis 14 erfolgt mittels eines gesteuerten Wechselrichters 21. Über einen Stopfzyklus hinweg kann damit die Vibrationsfrequenz variiert werden. Beim Eintauchen in den Schotter 7 werden die Stopfwerkzeuge 12 beispielsweise mit einer höheren Frequenz beaufschlagt. Der in Vibration versetzte Schotter 7 gleicht dabei einem fließenden Medium mit geringem Eintauchwiderstand. Beim Beistellen wird die Frequenz auf ca. 35 Hz abgesenkt, um die gewünschte Stabilität im sich verdichtenden Schotter 7 sicherzustellen.

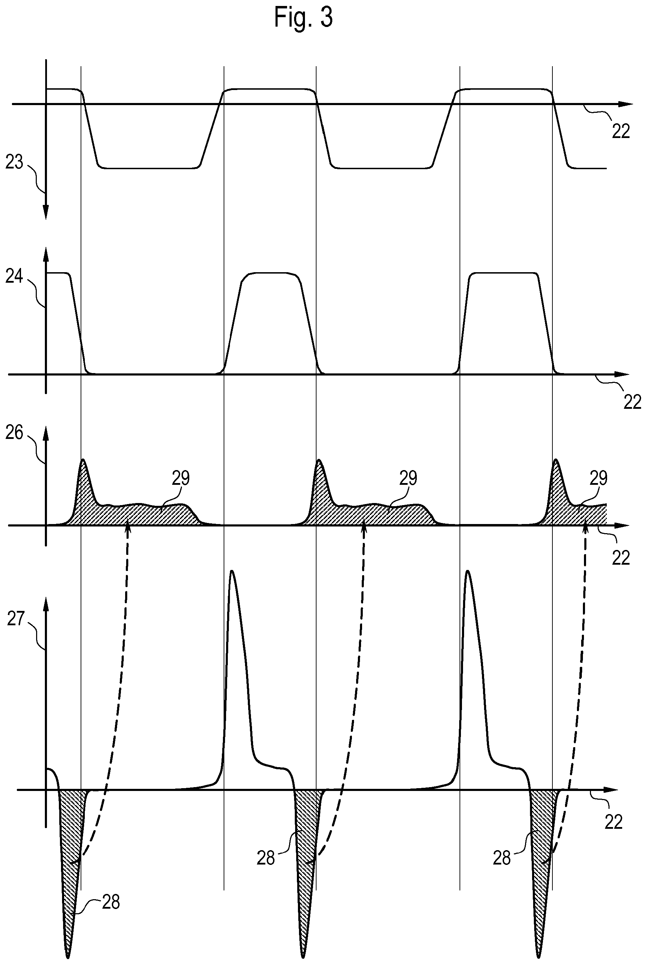

Wie in Fig. 3 ersichtlich, benötigt der Vibrationsantrieb 11 beim Eintauchen aufgrund der erhöhten Frequenz die meiste Energie. Die Diagramme zeigen synchrone Verläufe über der Zeit 22. Ganz oben ist der Verlauf einer Eindringtiefe 23 der Stopfwerkzeugspitzen in den Schotter 7 dargestellt. Darunter folgen die Verläufe einer Vorfahrtgeschwindigkeit 24 der Gleisbaumaschine 1 in Arbeitsrichtung 25, einer Motorleistung 26 des Vibrationsantriebs 11 und einer Antriebs- bzw. Bremsleistung 27 der elektrischen Maschine 13. In einer vereinfachten Variante kann die positive Antriebsleistung 27 zur Vorwärtsbeschleunigung der Gleisbaumaschine 1 durch einen separaten Antrieb abgedeckt werden.

Die negative Antriebs- bzw. Bremsleistung 27 wird jedenfalls zur Versorgung des Vibrationsantriebs 11 genutzt. Hier kommt es zu einer zeitlichen Überschneidung der von der elektrischen Maschine 13 abgegebenen Energie 28 (schraffierter Bereich im Diagramm Antriebs- bzw. Bremsleistung 27) und der vom Vibrationsantrieb 11 verbrauchten Energie 29 (schraffierter Bereich im Diagramm Motorleistung 26). Durch diese zeitliche Überschneidung wird ein erheblicher Teil der an den Zwischenkreis 14 abgegebenen Energie 28 sofort verbraucht, ohne den Energiespeicher 15 zu belasten.

Günstigerweise ist der Zwischenkreis 14 mit dem Energiespeicher 15 in einer zentralen Versorgungseinheit 30 angeordnet. Diese umfasst eine Steuerungseinheit 31 zur koordinierten Ansteuerung der mit dem Zwischenkreis 14 gekoppelten Komponenten 16, 17, 20, 21. Dabei ist ein Bus-System 32 zur Verbindung der Steuerungseinheit 31 mit den gekoppelten Komponenten 16, 17, 20, 21 vorgesehen.

Sinnvollerweise sind der Steuerungseinheit 31 diverse Sensorsignale zugeführt. So werden durch die laufende Erfassung einer Zwischenkreisspannung 33 die Energiespeicherung im Zwischenkreis 14 und die Ansteuerung der gekoppelten Komponenten 16, 17, 20, 21 optimiert. Ein Detektieren der Schwellen 8 oder Schienenbefestigungsmittel mittels optischer, kapazitiver oder induktiver Sensoren ermöglicht zudem ein automatisiertes Abbremsen und Unterstopfen einer detektierten Schwelle 8.

## Patentansprüche

1. Gleisbaumaschine (1) zum Verdichten von Schotter (7) unter Schwellen (8) eines Gleises (5), mit einem mittels Fahrwerken (3) auf dem Gleis (5) verfahrbaren Maschinenrahmen (2) und mit einem Stopfaggregat (6), das einen elektrischen Vibrationsantrieb (11) zur Vibrationsbeaufschlagung von Stopfwerkzeugen (12) umfasst, **dadurch gekennzeichnet, dass** ein elektrischer Zwischenkreis (14) mit einem elektrischen Energiespeicher (15) angeordnet ist, dass zumindest einem Fahrwerk (3) eine elektrische Maschine (13) zugeordnet ist, die für einen generatorischen Betrieb mit dem Zwischenkreis (14) gekoppelt ist, dass der elektrische Vibrationsantrieb (11) zur Versorgung an den Zwischenkreis (14) gekoppelt ist und dass eine Steuerungseinheit (31) in der Weise zur koordinierten Ansteuerung der mit dem Zwischenkreis (14) gekoppelten Komponenten (16, 17, 20, 21) eingerichtet ist, dass die Vibrationsbeaufschlagung der Stopfwerkzeuge (12) zur unmittelbaren Energienutzung bereits während eines Bremsvorgangs beginnen kann.

2. Gleisbaumaschine (1) nach Anspruch 1, **dadurch gekennzeichnet, dass** der elektrische Energiespeicher (15) einen Superkondensator (18) umfasst.

3. Gleisbaumaschine (1) nach Anspruch 1 oder 2, **dadurch gekennzeichnet, dass** der elektrische Energiespeicher (15) einen Akkumulator (19) umfasst.

4. Gleisbaumaschine (1) nach einem der Ansprüche 1 bis 3, **dadurch gekennzeichnet, dass** die elektrische Maschine (13) als Fahrantrieb ausgebildet und mittels eines bidirektionalen Umrichters (17) an den Zwischenkreis (14) angeschlossen ist.

5. Gleisbaumaschine (1) nach einem der Ansprüche 1 bis 4, **dadurch gekennzeichnet, dass** der Vibrationsantrieb (11) mittels eines Wechselrichters (21) an den Zwischenkreis (14) angeschlossen ist.

6. Gleisbaumaschine (1) nach einem der Ansprüche 1 bis 5, **dadurch gekennzeichnet, dass** der Vibrationsantrieb (11) als bürstenloser Elektromotor ausgebildet ist.

7. Gleisbaumaschine (1) nach einem der Ansprüche 1 bis 6, **dadurch gekennzeichnet, dass** das Stopfaggregat (6) an dem Maschinenrahmen (2) angeordnet ist.

8. Gleisbaumaschine (1) nach einem der Ansprüche 1 bis 7, **dadurch gekennzeichnet, dass** der Zwischenkreis (14) zur Energieversorgung mit einer Verbrennungsmotor-Generator-Einheit (16) gekoppelt ist.

9. Gleisbaumaschine (1) nach einem der Ansprüche 1 bis 8, **dadurch gekennzeichnet, dass** der Zwischenkreis (14) mit einer Umrichterschaltung zur Energieversorgung aus einer Oberleitung des Gleises (5) gekoppelt ist.

10. Verfahren zum Betreiben einer Gleisbaumaschine (1) nach einem der Ansprüche 1 bis 9, **dadurch gekennzeichnet, dass** die Gleisbaumaschine (1) beim Anfahren einer zu stopfenden Stelle des Gleises (5) mittels der elektrischen Maschine (13) unter Abgabe elektrischer Energie (28) an den Zwischenkreis (14) abgebremst wird und dass der Vibrationsantrieb (11) während eines Stopfvorgangs in der Weise aus dem Zwischenkreis (14) mit elektrischer Energie (29) versorgt wird, dass die Vibrationsbeaufschlagung der Stopfwerkzeuge (12) zur unmittelbaren Energienutzung bereits während des Bremsvorgangs beginnt.

11. Verfahren nach Anspruch 10, **dadurch gekennzeichnet, dass** die Stopfwerkzeuge (12) während eines Eintauchens in den Schotter (7) mit einer höheren Vibrationsfrequenz beaufschlagt werden als während eines Beistellvorgangs.

## Claims

1. A track maintenance machine (1) for compaction of ballast (7) under sleepers (8) of a track (5), having a machine frame (2) mobile by means of undercarriages (3) on the track (5) and a tamping unit (6) which comprises an electric vibration drive (11) for vibratory actuation of tamping tools (12), **characterized in that** an electric intermediate circuit (14) with an electric energy store (15) is arranged, that an electric machine (13) is associated with at least one undercarriage (3) and coupled for generator operation to the intermediate circuit (14), that the electric vibration drive (11) is coupled to the intermediate circuit (14) for supply, and that a control unit (31) is designed for coordinated actuation of the components (16, 17, 20, 21) coupled to the intermediate circuit (14) in this way that the vibratory actuation of the tamping tools (12) can start already during the braking procedure, for an immediately energy usage.

2. A track maintenance machine (1) according to claim 1, **characterized in that** the electric energy store (15) comprises a super capacitor (18).

3. A track maintenance machine (1) according to claim 1 or 2, **characterized in that** the electric energy store (15) comprises an accumulator (19).

4. A track maintenance machine (1) according to one of claims 1 to 3, **characterized in that** the electric machine (13) is designed as a motive drive and connected by means of a bidirectional converter (17) to the intermediate circuit (14).

5. A track maintenance machine (1) according to one of claims 1 to 4, **characterized in that** the vibration drive (11) is connected to the intermediate circuit (14) by means of an inverter (21).

6. A track maintenance machine (1) according to one of claims 1 to 5, **characterized in that** the vibration drive (11) is designed as a brushless electric motor.

7. A track maintenance machine (1) according to one of claims 1 to 6, **characterized in that** the tamping unit (6) is arranged on the machine frame (2).

8. A track maintenance machine (1) according to one of claims 1 to 7, **characterized in that** the intermediate circuit (14) is coupled for energy supply to a combustion engine - generator unit (16).

9. A track maintenance machine (1) according to one of claims 1 to 8, **characterized in that** the intermediate circuit (14) is coupled to a converter circuitry for energy supply from a catenary of the track (5).

10. A method for operation of a track maintenance machine (1) according to one of claims 1 to 9, **characterized in that,** when approaching a location of the track (5) to be tamped, the track maintenance machine (1) is braked by means of the electric machine (13) while giving off electric energy (28) to the intermediate circuit (14), and that during a tamping operation the vibration drive (11) is supplied with electric energy (29) from the intermediate circuit (14) **in that** way that the vibratory actuation of the tamping tools (12) starts already during the braking procedure, for an immediately energy usage.

11. A method according to claim 10, **characterized in that** the tamping tools (12) are actuated with a higher vibration frequency during penetration into the ballast (7) than during a squeezing operation.

## Revendications

1. Machine de pose de voie (1) pour le compactage de ballast (7) sous des traverses (8) d'une voie ferrée (5), avec un châssis de machine (2) pouvant être déplacé sur la voie ferrée (5) au moyen de mécanismes de roulement ferroviaires (3) et avec un module de bourrage (6) qui comprend un entraînement vibratoire électrique (11) pour la sollicitation vibratoire d'outils de bourrage (2), **caractérisée en ce qu'un** circuit intermédiaire électrique (14) avec un accumulateur d'énergie électrique (15) est agencé, qu'une machine électrique (13) est associée à au moins un mécanisme de roulement ferroviaire (3), laquelle est couplée au circuit intermédiaire (14) pour un fonctionnement générateur, que l'entraînement vibratoire électrique (11) est couplé pour l'alimentation au circuit intermédiaire (14) et qu'un module de commande (31) est configuré pour la commande coordonnée des composants (16, 17, 20, 21) couplés au circuit intermédiaire (14) de telle sorte que la sollicitation vibratoire des outils de bourrage (12) peut déjà commencer pendant un processus de freinage en vue de l'utilisation directe d'énergie.

2. Machine de pose de voie (1) selon la revendication 1, **caractérisée en ce que** l'accumulateur d'énergie électrique (15) comprend un super condensateur (18).

3. Machine de pose de voie (1) selon la revendication 1 ou 2, **caractérisée en ce que** l'accumulateur d'énergie électrique (15) comprend un accumulateur (19).

4. Machine de pose de voie (1) selon une des revendications 1 à 3, **caractérisée en ce que** la machine électrique (13) est réalisée en tant que système d'entraînement et raccordée au circuit intermédiaire (14) au moyen d'un convertisseur bidirectionnel (17).

5. Machine de pose de voie (1) selon une des revendications 1 à 4, **caractérisée en ce que** l'entraînement vibratoire (11) est raccordé au circuit intermédiaire (14) au moyen d'un onduleur (21).

6. Machine de pose de voie (1) selon une des revendications 1 à 5, **caractérisée en ce que** l'entraînement vibratoire (11) est réalisé en tant que moteur électrique sans balai.

7. Machine de pose de voie (1) selon une des revendications 1 à 6, **caractérisée en ce que** le module de bourrage (6) est agencé sur le châssis de machine (2).

8. Machine de pose de voie (1) selon une des revendications 1 à 7, **caractérisée en ce que** le circuit intermédiaire (14) est couplé à un module de moteur à combustion interne-générateur (16) pour l'alimentation en énergie.

9. Machine de pose de voie (1) selon une des revendications 1 à 8, **caractérisée en ce que** le circuit intermédiaire (14) est couplé à une connexion d'ondulateur en vue de l'alimentation en énergie depuis une caténaire de la voie ferrée (5).

10. Procédé d'exploitation d'une machine de pose de voie (1) selon une des revendications 1 à 9, **caractérisé en ce que** la machine de pose de voie (1) est freinée lors du démarrage d'un point à bourrer de la voie ferrée (5) au moyen de la machine électrique (13) avec émission d'énergie électrique (28) vers le circuit intermédiaire (14) et que l'entraînement vibratoire (11) est alimenté en énergie électrique (29) pendant un processus de bourrage depuis le circuit intermédiaire (14) de telle sorte que la sollicitation vibratoire des outils de bourrage (12) commence déjà pendant le processus de freinage en vue de l'utilisation directe d'énergie.

11. Procédé selon la revendication 10, **caractérisé en ce que** les outils de bourrage (12) sont sollicités pendant une immersion dans le ballast (7) avec une fréquence vibratoire supérieure à pendant un processus d'adjonction.
